# EUROPEAN PATENT SPECIFICATION

(11) **EP 4 428 259 B1**
(45) Date of publication and mention of the grant of the patent: **12.11.2025**
(21) Application number: 23165618.2
(22) Date of filing: 30.03.2023
(51) Int. Cl.: C21C 1/08, C22C 33/10, C22C 33/08, C21C 1/10, C22C 38/00, C22C 37/04

(54) **A METHOD FOR THE MODIFICATION OF PRIMARY CARBIDE PRECIPITATES IN CAST IRON ALLOYS**
VERFAHREN ZUR MODIFIZIERUNG VON PRIMÄREN KARBIDAUSSCHEIDUNGEN IN GUSSEISENLEGIERUNGEN
PROCEDE DE MODIFICATION DE PRECIPITES PRIMAIRES DE CARBURE DANS DES ALLIAGES DE FONTE

(30) Priority: 07.03.2023 PL 44398823
(43) Date of publication of application: 11.09.2024
(73) Proprietor: Akademia Gorniczo-Hutnicza im. Stanislawa Staszica w Krakowie, 30-059 Krakow (PL)
(72) Inventor: TECZA, Grzegorz, 30-394 Krakow, ul.Podole 33 (PL); SZCZESNY, Andrzej, 31-067 Krakow, ul.Piekarska 2/13 (PL)
(74) Representative: Rogozinska, Alicja

(56) References cited:
- EP-A1- 1 404 887
- EP-A1- 2 780 488
- EP-A1- 3 118 340
- EP-A1- 3 239 314
- EP-B1- 2 780 488
- CN-A- 102 383 066
- CN-A- 103 131 937
- CN-A- 103 572 166
- DE-A1- 10 230 383
- US-A1- 2004 151 612
- US-B2- 9 169 526
- JAIN ABHI-SHEK ET AL: "Refinement of primary carbides in hypereutectic high-chromium cast irons: a review", JOURNAL OF MATERIAL SCIENCE, KLUWER ACADEMIC PUBLISHERS, DORDRECHT, vol. 56, no. 2, 23 September 2020 (2020-09-23), pages 999 - 1038, XP037280928, ISSN: 0022-2461, [retrieved on 20200923], DOI: 10.1007/S10853-020-05260-8

## Description

The object of the invention is a method of modifying primary carbide precipitates in casting iron alloys.

Casting iron-carbon matrix alloys are widely used due to their simple and relatively inexpensive production. Appropriately selected methods of melting, heating and thermochemical treatment, as well as modification of the chemical composition give them excellent properties, such as wear resistance, corrosion resistance, heat resistance and high-temperature creep resistance, thanks to which they are used, among others, for the manufacture of heavy-duty cast abrasion-resistant tools operating, e.g., in the mining industry, extractive industry, material and aggregates processing industry, etc., and for components of mining tools, crushers, milling machines, rams, crushing bars, etc. Tools or their components with high abrasion resistance are usually made by precision casting.

The required properties are obtained by means of alloying elements, among which there is a special group of carbide-forming elements, used to achieve the effect of strengthening with a hard phase in the form of carbides where said carbides having the appropriate morphology and distribution enable producing casting alloys which combine properties typical of metals, such as plasticity and ductility, and typical of ceramics, such as high strength and high hardness.

A decisive influence on the properties of Fe-C casting alloys has the degree of homogeneity of the distribution of the carbides-containing strengthening phase in the matrix and the morphology of the carbide precipitates themselves. In other casting materials, such as aluminum alloys, it is used to produce composite metallic materials by introducing ceramic particles, such as Ti, W, V carbides, into the liquid melt. However, this solution has not proved to be sufficiently effective in the case of Fe-C alloys.

The addition of strong carbide-forming elements such as Ti, Nb, V, W, Zr, Hf and Ta is desirable from the point of view of casting properties, but primary carbides formed in the metallurgical process of Fe-C alloys with the participation of these elements are most often in the form of wall precipitates with sharp edges and/or form a continuous lattice across grain boundaries. When ready-made tool parts are cast from an alloy with the highest possible volume fraction of carbides, the limitation is the castability of the alloy, which decreases with increasing amounts of primary carbides. When the volume fraction of carbides is high, they tend to form clusters, so they are not evenly distributed in the cast metal volume, and the resulting particles in the liquid steel are most often lath-like, lamellar, wall-like or rod-like, which significantly reduces the. fracture toughness of castings.

A number of solutions are known to improve the structure of precipitates in Fe-C casting alloys. Thus, for example, in Pat.216943 and P.407278, P.415314, P.417810 and P.417811 are disclosed casting iron alloys and methods of manufacturing them which, to increase the resistance to abrasion, induce the formation of carbides in the structure of the material by introducing carbide-forming elements into the metallic charge or into the already molten casting alloy, and then by modifying the morphology of the carbide precipitates after the melting process is completed, before casting or in the ladle, as part of out-of-furnace processing. However, modifying, as part of out-of-furnace processing, the morphology and distribution of the primary carbide precipitates formed earlier in the furnace, where these precipitates are characterized by an unfavorable shape and distribution, cannot bring satisfactory results, due to both the difficulty in maintaining the required temperature and the fact that out-of-furnace modification of the liquid alloy does not cause significant changes in the morphology of the originally formed carbides of alloying elements.

Attempts are made to modify the liquid alloy by blowing ready-made metal carbide powders, or to produce composite zones in castings during chemical reactions by installing inserts made of metal powders. The author is also known to produce primary carbides during smelting of steel, and casting abrasive-resistant alloys from it.

In P.440950 there is described a tool casting alloy of high hardness and a method of its production, in which after melting alloying additives, stirring liquid steel, equalizing the temperature and deoxidizing the metal, a carbide-forming element is introduced. The metal thus obtained. is cast into ladles and then into molds and is subjected to heat treatment consisting of quenching and tempering, resulting in a structure with primary carbides evenly distributed in the matrix. Modifications of carbide-reinforced Fe-C matrix casting alloy are carried out according to the state of the art after completing the melting process, before casting or in the ladle. This description does not apply to modifications in the morphology of primary carbides.

Spheroidization (modification) processes of graphite precipitates using magnesium modifiers are also known in casting alloy metallurgy. In the patent literature, such as Pat.184889, Pat.180800, Pat.223581, Pat.220397, Pat.220050, Pat.204604, Pat.234059, Pat.169001, Pat.204607, Pat.205125 and Pat.180800, many solutions are described, concerning the ways and devices for modification of graphite precipitates in cast iron, as well as the form and chemical composition of the magnesium modifiers themselves. The modification of graphite precipitates is carried out as part of out-of-furnace processing, in a cast metal stream or in a ladle. This process, like the aforementioned heat treatment, does not significantly affect the morphology of the already produced primary carbides, so that lath-like, lamellar, wall-like or rod-like particles are still present in the structure of castings, deteriorating the properties of these castings, especially their fracture toughness.

U.S. patents US6511554B1 and US6511554B1 disclose methods of producing high-manganese content casting iron alloys reinforced with vanadium carbides. In the described methods, a spheroidal form of vanadium carbides is obtained by bringing the liquid metal in the furnace to temperatures well above the typical range of melting temperatures. Violent "boiling" of the liquid metal in the presence of Mg causes dispersion of gas bubbles in the volume of the liquid metal, producing nucleation sites for vanadium carbides and giving them a spheroidal shape. These methods require the use of very high melting temperatures. This entails problems related to the durability of the furnace lining, as well as excessive energy consumption, which in turn entails a significant increase in production costs and is environmentally unfriendly.

Patent application US 2004151612 A1 discloses a high manganese cast iron containing spheroidal vanadium carbide and method for making thereof which is nonmagnetic as well as has superior mechanical properties such as wear-resistance and toughness. Further does not require a water toughing heat treatment which has been needed when nonmagnetic high manganese steel (high manganese cast steel) is obtained by crystallized spheroidal vanadium in austenite matrix. The high manganese cast iron containing spheroidal vanadium carbide is comprised of C 1.5~4.0 wt%, V 6~15 wt%, Si 0.2~4.0 wt%, Mn 10~18 wt%, Mg 0.01~0.1 wt%, remaining iron (Fe) and inevitable impurities, spheroidal vanadium carbide is crystallized within a structure.

Patent application CN103131937 discloses a carbide-containing isothermal quenching nodular cast iron which is the chemical elemental constituents of the nodular cast iron, by weight, are that C is of 3.3-3.7%, Si is of 2.4-3.3%, Mn is of 0.2-0.5%, Cr is of 0.5-1%, Cu is of 0.5-0.8%, P is lower than 0.08%, S is lower than 0.025%, Mg is of 0.03-0.05%, RE is of 0.02-0.04%, nano-modifier is of 0.02-0.18%, and the balance is Fe. A preparation method comprises the steps of raw material preparing and smelting, spheroidizing and inoculation, adding of the nano-modifier and isothermal quenching. The preparation method has the advantages that the nano-modifier is used for enabling the strength, the hardness, the toughness and the abrasive resistance of the isothermal quenching nodular cast iron to be improved, impact toughness reaches more than 30 J/cm², abrasive resistance is improved exponentially, and the hardness of the isothermal quenching nodular cast iron can reach HRC 50.

At the present time, there is no solution that would enable obtaining in iron-carbon matrix alloys not only favorable morphology and distribution of graphite precipitates, but also homogeneous distribution and spheroidal shape of primary carbide precipitates by a method simple, inexpensive in operation and not excessively burdening the environment. In addition, due to the much lower mass density of magnesium relative to the Fe-C matrix alloy, its low boiling point and high affinity for oxygen, there is a rapid loss of magnesium content in the liquid metal during the process, which leads to a weakening of the modification effect.

Thus, the essence of the invention is to propose a simple and inexpensive in operation method of modifying the precipitates of primary carbides in casting iron alloys, where, by means of this method, oval (globular, spheroidal) precipitates of primary carbides can be obtained in the iron-carbon matrix alloy, and where these precipitates after casting are evenly distributed in the alloy matrix, and the effect of modification is permanent.

This is achieved according to the invention by a method that is disclosed in the independent method claim.

Preferred embodiments are disclosed in the dependent claims.

Therefore, the special feature of the method according to the invention is the two-stage modification of steel or cast iron in the liquid state, i.e. a liquid alloy of iron with carbon and other elements, carried out in the furnace and not outside the furnace, as in the state of the art. It turned out unexpectedly that the addition of a magnesium modifier to the liquid metal in the furnace, prior to the introduction of the carbide-forming elements into this metal, directly affects the morphology of the primary carbides, thus enabling the manufacture of alloys characterized by a multiphase/composite structure with primary metal carbides produced directly in the furnace, where said carbides have the desired oval, globular and spherical shape and are evenly distributed in the Fe-C matrix, For this purpose, the method according to the invention proposes a two-stage modification of the liquid alloy, involving the first stage, which consists in changing the chemical composition of the liquid steel during melting in such a way that by modifying the liquid metal with an appropriate amount of modifier, the Mg content that is obtained in the liquid metal ensures the spheroidization of the primary carbides, and the second stage, which is carried out with the same or another available modifier just before casting the metal into the mold, so as to maintain the Mg content in the liquid metal required for the modifier effect to last for a sufficiently long time until the alloy solidifies.

According to the new solution, in order for the resulting primary carbide particles to be oval, globular and spheroidal, it is necessary to carry out modification of the liquid alloy even before the addition of carbide-forming elements, so that its physicochemical state allows the formation of oval particles. Therefore, before adding carbide-forming elements, which, according to the state of the art, under the conditions of melting in the furnace, inevitably lead to the formation of lath-shaped, lamellar-shaped, wall-shaped or rod-shaped precipitates with a tendency to form clusters (agglomerates), the first stage of modification is carried out, and it consists in introducing the addition of magnesium into the liquid metal bath in the furnace. In doing so, magnesium can come from any commercially available modifier, advantageously in the form of FeSi+Mg (70-95+30-5 wt%), but also in other forms of alloys, master alloys or mixtures. Modification of the liquid metal can be carried out, for example, by adding a mixture of Fe-Si+Mg with an Mg content of usually 5 to 30 wt%. The amount of modifier is selected within the framework of routine engineering knowledge so that before the introduction of carbide-forming elements, the Mg content in the liquid steel is 0.01 - 0.05 wt%. This amount of magnesium provides conditions conducive to spheroidization of primary carbides. After the two-stage modification, in the structure of the castings thus produced there are oval, globular and spheroidal carbide precipitates, evenly distributed in the volume of the casting.

The introduction of a modifier prior to the introduction of carbide-forming elements prevents the formation of lath-shaped, lamellar-shaped, wall-shaped or rod-shaped primary carbides having a tendency to form clusters, and ensures that the desired oval shape of primary carbide precipitates is obtained.

Unexpectedly, it turned out that the introduction of the modifier into the liquid metal prior to the addition of carbide-forming elements to this metal causes such a change in the physicochemical state of the liquid metal that primary carbides of oval (spheroidal) shape are formed therein producing in castings made from this metal the desired structure, unencumbered by defects resulting from the presence of flat carbide precipitates, distributed unevenly in the alloy structure.

This type of structure provides a significant improvement in the fracture toughness of castings with a high volume fraction of carbides, which in turn enables casting tools from an alloy with a predetermined chemical composition, that is, making these tools directly by a simple, fast and inexpensive method. Such types of alloys, after appropriate heat treatment or thermo-chemical treatment, can become competitive with materials produced by powder metallurgy.

The method according to the invention can be applied to all iron-carbon matrix casting alloys, giving them, by deliberate modification of the morphology of the primary carbide precipitates and their uniform distribution in the matrix, excellent mechanical properties, especially wear resistance. The method is simple to implement, as well as economical, since it is carried out in the typical, effectively controllable range of temperatures using typical available charge materials, i.e. metallurgical pig iron, scrap or their mixtures, and ferroalloys. The method according to the invention can use all commercially available magnesium modifiers, as well as all state-of-the-art known modification methods. The method according to the invention is suitable for use in any foundry within the framework of existing equipment, and therefore does not require additional expenditures on new equipment or complex measurement techniques.

The selection of the amount and composition of the modifier, as well as the methods of introducing it into the liquid metal, are a matter of routine engineering selection by an expert in iron alloy metallurgy, and are not the subject of the present invention. An expert with appropriate knowledge and experience is able to select the modification parameters in accordance with the charge material used, the composition of the metal, the properties of the castings, and the technological capabilities of a foundry, i.e. the equipment and materials available in this foundry. The same applies to the parameters of the charge melting process, selection of the type and amount of deoxidizer, control of the chemical composition of the liquid metal and casting parameters, which are routine procedures in foundries and do not require further description here.

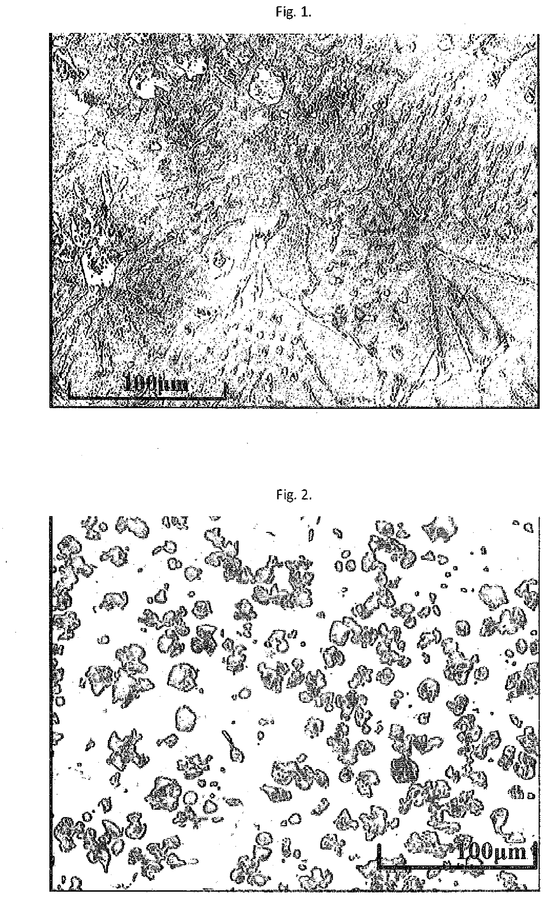

An embodiment of the invention will be explained in detail below with reference to the drawing, where Figure 1 shows the microstructure of high-alloyed cast iron after classical modification of liquid steel before casting according to the state of the art, with visible lamellar primary carbide precipitates, and Figure 2 - the microstructure of high-alloyed cast iron after two-stage modification of liquid steel according to the invention, with visible oval, evenly distributed primary carbide precipitates.

A process was carried out to obtain vanadium cast iron characterized by high abrasion resistance, with oval vanadium carbides produced in this cast iron, wherein the liquid metal during melting, before the addition of carbide-forming elements, was modified by the introduction of FeSi-Mg (80 - 20 wt%). After the first operation of modification, carbide-forming elements were added, and after melting them and stirring the liquid metal, a second operation of modification was carried out using the same magnesium modifier added before casting the metal into a mold.

Melting was carried out in an induction furnace with a 10 kg capacity crucible for vanadium cast iron, i.e. Fe-C casting alloy with vanadium. The charge composition included 6420g of home scrap of pig iron containing 93 wt% Fe, 4.5 wt% C, 0.03 wt% Mn, 0.30 wt% Si, 0.02 wt% Cr and 0.02 wt% Ni, and the rest in the form of other additives and unavoidable impurities. The charge was loaded to the bottom of the crucible before the furnace was turned on. After melting the charge, heating the metal to about 1500°C, stirring and equilibrating the temperature, the metal was deoxidized with aluminum in the amount of 10g, followed by the addition of ferroalloys in the amount of 117g Fe-Mn80, 42g Fe-Si75, 642g Fe-Mo60, 101g Fe-W90 and 101g chromium (99.9%Cr), introduced in portions so as not to lower the temperature of the metal bath.

After melting the alloying additives, stirring the liquid steel and equilibrating the temperature, the metal was first modified by introducing about 85g FeSi-Mg 80-20 into the liquid steel using the rod method, and then the carbide-forming element in the form of Fe-V80 ferroalloy in the amount of 1712g was added in portions, in such a way as not to lower the temperature of the metal bath. After the last portion of ferroalloy was added, the liquid metal was held in the furnace for about 10 minutes in order to equalize the chemical composition and to obtain the mold pouring temperature of 1550 ÷ 1600°C.

Before the metal was cast into the mold, the second stage of modification of the liquid steel was carried out using the rod method, by which about 85g of FeSi-Mg 80-20 was introduced, in the same way as in the first stage of modification.

Thus, the liquid cast iron was subjected to two stages of modification, first before the introduction of carbide-forming additives, and second before casting, each time introducing Mg into the liquid metal in such a selected amount that after modification/spheroidization and casting its content in the melt was 0.01 - 0.05 wt%.

In this way, vanadium cast iron with high hardness and abrasion resistance was obtained. The chemical composition of the obtained cast iron is shown in Table 1, the rest is Fe and unavoidable impurities.

**Table 1. Chemical composition of the obtained vanadium cast iron**

| Chemical composition [wt%] | | | | | | | | | | | |
|---|---|---|---|---|---|---|---|---|---|---|---|
| C | Mn | Si | P | S | Mo | Cr | Ni | W | Al | V | Mg |
| 3.5 | 0.9 | 1.5 | 0.02 | 0.02 | 4.4 | 1.0 | 0.01 | 0.8 | 0.03 | 15 | 0.02 |

Figure 2 shows an example of the microstructure of high-vanadium cast iron subjected" to the two-stage modification according to the invention. The obtained microstructure, consisted of a matrix and oval primary carbides evenly distributed in this matrix. The microstructure obtained by the two-stage modification according to the invention was compared to the microstructure of high-vanadium cast iron modified according to the state of the art before casting the metal into a mold (Fig. 1). The microstructure modified according to the state of the art consisted of a matrix and lamellar vanadium carbides occurring within the grains. The chemical composition of vanadium cast iron obtained by the known state-of-the-art method is shown in Table 2, the rest of is Fe and unavoidable impurities.

**Table 2. (Not part of the claimed solution but used to better understand the invention) Chemical composition of vanadium cast iron modified with boron obtained according to the state of the art method .**

| Chemical composition [wt%] | | | | | | | | | | | |
|---|---|---|---|---|---|---|---|---|---|---|---|
| C | Mn | Si | P | S | Cr | Mo | W | Al | V | B | Mg |
| 3.3 | 0.6 | 0.5 | 0.03 | 0.03 | 1.7 | 2.9 | 2.8 | 0.04 | 13 | 0.003 | <0.001 |

## Claims

1. A method of modifying primary carbide precipitates in casting iron alloys, wherein:
a) a charge material in the form of metallurgical pig iron of known composition or other scrap, or a mixture thereof, is supplied to the furnace;
b) the charge material is melted by heating to the temperature required to melt all the components, stirred until the temperature is equalized throughout the liquid metal, then deoxidized with aluminium, after which the chemical composition of the melted charge material is determined;
c) if differences are found between the chemical composition of the charge material and the preset chemical composition of the casting material," the chemical composition of the liquid metal in the furnace is supplemented to the desired preset composition, gradually entering into the deoxidized liquid metal, so as to keep its temperature from lowering, the required alloying additives in appropriate amounts, excluding carbide-forming elements including Ti, Nb, V, W, Zr, Hf and Ta, and after melting all the components, the metal volume in the furnace is stirred until the temperature is equalized;
d) a magnesium modifier is added in such a selected amount that the Mg content in the liquid metal is 0.01 - 0.05 wt%;
e) at least one carbide-forming element, selected from Ti, Nb, V, W, Zr, Hf and Ta, is gradually introduced in form of ferroalloy into the liquid metal, so as to keep its temperature from lowering, in an amount corresponding to the preset chemical composition of the cast metal wherein the total content of carbide-forming elements, selected from Ti, Nb, V, W, Zr, Hf and Ta, is from 1 wt% to 15 wt%.;
f) after introducing the last portion of at least one carbide-forming element and thus obtaining the preset chemical composition, the liquid metal is annealed in the furnace to equalize the chemical composition in its entire volume and to obtain a uniform temperature of the metal draining into the ladle;
g) the draining of the metal into the ladle is carried out;
h) magnesium modifier is added again to the liquid metal in the ladle in such a selected amount that the Mg content in the liquid metal is 0.01 - 0.05 wt%; and
i) the liquid metal of the specified chemical composition is cast from the ladle into a mold.

2. The method according to claims 1, **characterized in that** the same magnesium modifier is used in the first stage of modification and in the second stage of modification.

3. The method according to claim 1, **characterized in that** the different magnesium modifiers are used in the first stage of modification and in the second stage of modification.

## Patentansprüche

1. Verfahren zur Modifizierung von primären Karbidausscheidungen in Gusseisenlegierungen, wobei:
a) ein Einsatzmaterial in Form von metallurgischem Roheisen bekannter Zusammensetzung oder anderem Schrott oder einer Mischung davon dem Ofen zugeführt wird;
b) das Einsatzmaterial durch Erhitzen auf die zum Schmelzen aller Komponenten erforderliche Temperatur geschmolzen, gerührt, bis die Temperatur im flüssigen Metall gleich ist, und anschliessend mittels Aluminium desoxidiert wird, wonach die chemische Zusammensetzung des geschmolzenen Beschickungsmaterials bestimmt wird;
c) bei Abweichungen zwischen der chemischen Zusammensetzung des Beschickungsmaterials und der vorbestimmten chemischen Zusammensetzung des Gießmaterials die chemische Zusammensetzung des flüssigen Metalls in dem Ofen zu der gewünschten vorbestimmten Zusammensetzung ergänzt wird, indem die erforderlichen Legierungselemente, ausgenommen karbidbildende Legierungselemente, umfassend Ti, Nb, V, W, Zr, Hf und Ta, jeweils in einer geeigneten Menge in das desoxidierte flüssige Metall stufenweise zugegeben werden, derart, dass die Metalltemperatur nicht abgesenkt wird, und nach dem Schmelzen aller Komponenten das Metallvolumen in dem Ofen gerührt wird, bis die Temperatur ausgeglichen ist;
d) ein Magnesiummodifizierungsmittel in einer Menge zugegeben wird, die derart ausgewählt wird, dass der Mg-Gehalt in dem flüssigen Metall 0,01 bis 0,05 Gew.-% beträgt;
e) mindestens ein karbidbildendes Legierungselement, ausgewählt aus Ti, Nb, V, W, Zr, Hf und Ta, in Form einer Ferrolegierung in einer der vorbestimmten Zusammensetzung des Gießmaterials entsprechenden Menge stufenweise dem flüssigen Metall zugegeben werden, derart, dass die Metalltemperatur nicht abgesenkt wird, wobei der Gesamtgehalt der karbidbildenden Legierungselemente, ausgewählt aus Ti, Nb, V, W, Zr, Hf und Ta, von 1 bis 15 Gew.-% beträgt;
f) nachdem die letzte Teilmenge mindestens eines karbidbildenden Legierungselements eingeführt und damit die vorbestimmte Zusammensetzung erreicht wird, das flüssige Metall im Ofen geglüht wird, bis seine chemische Zusammensetzung im ganzen Volumen ausgeglichen und eine gleichmässige Temperatur erreicht ist, mit der anschliessend das flüssige Metall in eine Pfanne abgegossen wird;
g) das Metall in die Pfanne abgegossen wird;
h) das Magnesiummodifizierungsmittel dem flüssigen Metall in der Pfanne wieder zugegeben wird, und zwar in einer derart ausgewählten Menge, dass der Mg-Gehalt in dem flüssigen Metall 0,01 bis 0,05 Gew.-% beträgt; und
i) das flüssige Metall der vorbestimmten chemischen Zusammensetzung aus der Pfanne in eine Form gegossen wird.

2. Verfahren nach Anspruch 1, **dadurch gekennzeichnet, dass** in der ersten Stufe der Modifizierung und in der zweiten Stufe der Modifizierung das gleiche Magnesiummodifizierungsmittel eingesetzt wird.

3. Verfahren nach Anspruch 1, **dadurch gekennzeichnet, dass** in der ersten Stufe der Modifizierung und in der zweiten Stufe der Modifizierung verschiedene Magnesiummodifikatoren eingesetzt werden.

## Revendications

1. Procédé de modification des précipités de carbures primaires dans les alliages de fonderie, dans lequel:
a) la matière de charge sous forme de fonte brute de composition connue ou autre ferraille, ou leur mélange, est introduite dans le four;
b) la matière de charge fond, en étant chauffée à la température requise pour fondre tous les composants, on ringarde jusqu'à l'égalisation de la température dans tout le volume du métal liquide, ensuite on désoxyde avec de l'aluminium, après quoi on définit la composition chimique de la matière de charge fondue;
c) si des différences entre la composition chimique de la matière de charge et la composition chimique de la matière coulée ont été constatées, la composition chimique du métal liquide dans le four est complétée afin d'obtenir la composition spécifiée requise, en introduisant dans le métal liquide désoxydé progressivement, pour éviter une baisse de sa température, des éléments d'addition requis en quantité appropriée, en excluant des éléments carburigènes comprenant Ti, Nb, V, W, Zr, Hf et Ta, et après avoir fondu tous les composants on ringarde le contenu du four jusqu'à l'égalisation de la température;
d) on ajoute un inoculant de magnésium en quantité telle pour que le contenu du Mg dans le métal liquide soit de 0,01 - 0,05% massiques;
e) dans le métal liquide on introduit progressivement, pour éviter une baisse de sa température, au moins un élément carburigène sous forme de ferro-alliage, choisi parmi Ti, Nb, V, W, Zr, Hf et Ta, en quantité correspondante à la composition chimique spécifiée du métal coulé, la quantité totale des éléments carburigènes, choisis parmi Ti, Nb, V, W, Zr, Hf et Ta, étant 1% massique à 15% massiques;
f) après avoir introduit la dernière portion d'au moins un élément carburigène et ainsi obtenu la composition chimique spécifiée, le métal liquide dans le four est maintenu à température pour égaliser la composition chimique dans tout le volume et obtenir une température uniforme de la coulée en poche du métal;
g) on réalise une coulée en poche du métal;
d) au métal liquide dans la poche on ajoute encore un inoculant de magnésium en quantité telle pour que le contenu du Mg dans le métal liquide soit de 0,01 - 0,05% massiques; et
i) le métal liquide de composition chimique spécifiée est coulé depuis la poche dans une forme.

2. Procédé selon la revendication 1, **caractérisé en ce que** dans la première étape de modification et la deuxième étape de modification on utilise le même inoculant de magnésium.

3. Procédé selon la revendication 1, **caractérisé en ce que** dans la première étape de modification et la deuxième étape de modification on utilise différents inoculants de magnésium.
